# EUROPEAN PATENT APPLICATION

(11) **EP 4 717 543 A1**
(43) Date of publication of application: **01.04.2026**
(21) Application number: 24203533.5
(22) Date of filing: 30.09.2024
(51) Int. Cl.: B60W 40/12, B60W 40/13, B60W 50/00, B60W 50/04, G06V 20/58

(54) **SYSTEM AND METHOD FOR ENABLING A VEHICLE TO BECOME READY TO DRIVE**

(71) Applicant: Volvo Truck Corporation, 405 08 Göteborg (SE)
(72) Inventor: Chavrier, Philemon, 38230 TIGNIEU JAMEYZIEU (FR); Borrel, Frederic, 69500 BRON (FR); Dufourneaud, Estelle, 69001 LYON (FR)
(74) Representative: Valea AB

(57) **Abstract**

The present disclosure relates to a computer system (600) for enabling a vehicle (100) to become ready to drive. The computer system (600) comprising processing circuitry (602) configured to:
- obtain a first image of an outside of the vehicle (100);
- identify the vehicle (100) in the first image;
- obtain vehicle information;
- determine current dimensions of the vehicle (100);
- compare the current dimensions with allowed dimensions;
- when a result of the comparison indicates that the current dimensions are out of bounds, check the first image to determine if the vehicle (100) comprises an exceptional convoy sign;
- when the current dimensions are out of bounds and the vehicle (100) does not comprise the exceptional convoy sign, provide information indicating that the current dimensions are out of bounds; and to
- initiate a protection strategy in the vehicle (100).

## Description

### TECHNICAL FIELD

The disclosure relates generally to a computer system, a computer-implemented method, a computer program product and a non-transitory computer-readable storage medium. In particular aspects, the disclosure relates to enabling a vehicle to become ready to drive. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicle height and particularly special loads are an issue for a user of the vehicle and also for road infrastructures. Many roads are limited to a height of 4,2m, while the load of the vehicle is mainly unknown or wrongly or inaccurately measured by the user, or it may not be measured at all. This situation may lead to accidents and dangerous situations. For example, when the vehicle enters a tunnel and the vehicle height, including its loads, exceeds the tunnel height, it may cause severe damage.

Before starting to drive, users are requested to manually check the load height. A manual height check may be unprecise and time consuming, and this may lead to the user not performing the check. This is a major safety issue for both the user of the vehicle and bystanders. The vehicle will be deemed ready to drive, even though the height check has not been done.

There is a strive to improve enabling the vehicle to become ready to drive and to reduce the risk of accidents and dangerous situations.

### SUMMARY

According to a first aspect of the disclosure, a computer system for enabling a vehicle to become ready to drive is provided. The computer system comprises processing circuitry configured to:
- obtain a first image of an outside of the vehicle;
- identify the vehicle in the first image;
- obtain vehicle information of the identified vehicle;
- analyze the first image and the obtained vehicle information to determine current dimensions of at least part of the vehicle;
- compare the current dimensions with allowed dimensions for at least a part of a current or upcoming route to be travelled by the vehicle;
- when a result of the comparison indicates that the current dimensions are out of bounds of the allowed dimensions, check the first image to determine if the vehicle comprises an exceptional convoy sign;
- when the current dimensions are out of bounds and the vehicle does not comprise the exceptional convoy sign, provide information indicating that the current dimensions are out of bounds; and to
- initiate a protection strategy in the vehicle when the current dimensions are out of bounds and the vehicle does not comprise the exceptional convoy sign.

The first aspect of the disclosure may seek to improve enabling the vehicle to become ready to drive. A technical benefit may include that the enabling of the vehicle to become ready to drive is improved. The identified vehicle is associated with, for example, a vehicle identity. The vehicle information of the identified vehicle is obtained by for example using the vehicle identity to find the corresponding or matching vehicle information in a memory storage, a database etc. The information may be provided to a user of the vehicle. When the current dimensions are out of bounds and there is no exceptional convoy sign on the vehicle, the protection strategy is initiated. It may be a part of the vehicle that is within our out of bounds, for example the load of the vehicle, or it may be the whole vehicle. The protection strategy may comprise to prevent start of the vehicle engine, alerting bystanders with an alarm, limiting the vehicle speed, determining load reduction to fit within bounds etc. This reduces the risk of the vehicle being determined to be ready to drive when it in fact is not, i.e. when the current dimensions of at least part of the vehicle are out of bounds. The risk of accidents and damage due to the out of bounds dimensions are reduced.

Optionally in some examples, including in at least one preferred example, the processing circuitry may be further configured to:
- determine that the vehicle is ready to drive when the result of the comparison indicates that the current dimensions are within bounds of the allowed dimensions and/or when the vehicle comprises the exceptional convoy sign.

A technical benefit may include that the enabling of the vehicle to become ready to drive is improved. When the current dimensions of at least part of the vehicle are within bounds of the allowed dimensions, then the vehicle may be determined to be ready to drive. There will be no or reduced risk of accidents and damage when the current dimensions are within bounds. When the vehicle comprises the exceptional convoy sign, the vehicle may be considered ready to drive even though the current dimensions are out of bounds. The user of the vehicle may have specific training to drive a vehicle in the exceptional convoy category and the user may choose its itinerary.

Optionally in some examples, including in at least one preferred example, the processing circuitry may be further configured to:
- when the vehicle is determined to be ready to drive, store information indicating at least one of: current dimensions, checked vehicle features and the exceptional convoy sign.

A technical benefit may include that the enabling of the vehicle to become ready to drive is improved. The user of the vehicle is responsible for the condition of the vehicle and the stored information enables him/her to fulfill this responsibility.

Optionally in some examples, including in at least one preferred example, the processing circuitry may be further configured to:
- trigger activation of at least one vehicle feature comprised in the vehicle;
- obtain a second image of the vehicle after the at least one vehicle feature has been activated, wherein a current function of the at least one vehicle feature is derivable from the second image;
- based on the second image, compare a current function of the activated at least one vehicle feature with its intended function, wherein the at least one vehicle feature is working correctly when the current function and the intended function are the same, and wherein the at least one vehicle feature is working incorrectly when there is a difference between the current function and the intended function; and
- determine that the vehicle is ready to drive when the at least one vehicle feature is working correctly.

A technical benefit may include that the functioning of vehicle features of the vehicle are checked before the vehicle is determined to be ready to drive. The vehicle feature may be located on the inside or outside of the vehicle. The vehicle features may be for example brake lights, speed information presence, etc. When it has been verified that the vehicle feature is working correctly, it may be considered safe for the vehicle to start driving. This increases safety and reduces the risk of accidents.

Optionally in some examples, including in at least one preferred example, the processing circuitry may be further configured to:
- determine that the vehicle is not ready to drive when the at least one vehicle feature is working incorrectly.

A technical benefit may include that the vehicle may not be allowed to drive when there is at least one vehicle feature that is not working correctly. This increases safety and reduces the risk of accidents.

Optionally in some examples, including in at least one preferred example, the processing circuitry may be further configured to:
- provide information indicating an incorrect function of the at least one vehicle feature when the result of the comparison indicates that the current function is not the same as the intended function.

A technical benefit may include that there will be a possibility of correcting the incorrect function of the vehicle feature before it is determined to be ready to drive. The information may be provided to a user of the vehicle. The decision to be ready to drive is therefore postponed and the vehicle may be determined to be ready to drive at some later time after the incorrect function has been corrected.

Optionally in some examples, including in at least one preferred example, the processing circuitry may be further configured to:
- store the second image as justification of the current function of the at least one vehicle feature when it was used as a basis for determining that the vehicle is ready to drive.

A technical benefit may include that that for example, in case of a future accident or repair of the vehicle, the stored information may be used to search for an error, to obtain information indicating a cause of the accident or malfunction of the vehicle etc. The stored information may be provided to authorities and/or insurance companies as documentation of the correct functioning of the vehicle feature when the driving was started.

Optionally in some examples, including in at least one preferred example, the processing circuitry may be further configured to:
- determine that the current or upcoming route cannot be travelled by the vehicle because the current dimensions are out of bounds of the allowed dimensions; and to
- determine an alternative route to be taken by the vehicle to reach its destination, wherein the current dimensions are within bounds of the alternative route.

A technical benefit may include that the vehicle may not be limited by the current dimensions being out of bounds. The vehicle may instead take an alternative route where the current dimensions of at least part of the vehicle are within bounds. Thus, the vehicle may still be possible to reach the destination of the upcoming route but using an alternative route. This reduces the need to change the current dimensions of the vehicle in order to travel to the destination of the upcoming route, for example reduces the need to remove load, change the position of the load on the truck, activate suspension systems on the vehicle 100 adjust the height, etc. in order to become within bounds.

Optionally in some examples, including in at least one preferred example, the processing circuitry may be further configured to:
- provide information indicating that the current or upcoming route cannot be travelled by the vehicle.

A technical benefit may include that the user may take a decision regarding the upcoming route, for example to remove load, to change the position of the load on the vehicle so that the dimensions become within bounds, activate suspension systems on the vehicle adjust the height. The user may select an alternative route to travel where the current dimensions are within bounds. This improves the user experience, and also reduces the risk of collisions and accidents. The information may be provided to the user of the vehicle.

Optionally in some examples, including in at least one preferred example, the processing circuitry may be further configured to:
- provide information indicating the current dimensions being out of bounds of the allowed dimensions and when the vehicle comprises the exceptional convoy sign.

A technical benefit may include that the user may be given the responsibility of determining if the vehicle can still be considered to be ready to drive, even though the current dimensions of at least part of the vehicle are out of bounds. The exceptional convoy sign may be the cause of such a decision. The information may be provided to a user of the vehicle.

According to a second aspect of the disclosure, a vehicle comprising the computer system of the first aspect is provided. The second aspect of the disclosure may seek to improve enabling the vehicle to become ready to drive. A technical benefit may include that the enabling of the vehicle to become ready to drive is improved.

Technical benefits of the second aspect of the disclosure may correspond to the technical benefits of the first aspect of the disclosure. Further, all examples of the first aspect are applicable to and combinable with all examples of the second aspect, and vice versa.

According to a third aspect of the disclosure, a computer-implemented method enabling a vehicle to become ready to drive is provided. The method comprising:
- obtaining, by processing circuitry of a computer system, a first image of an outside of the vehicle;
- identifying, by the processing circuitry, the vehicle in the first image;
- obtaining, by the processing circuitry, vehicle information of the identified vehicle;
- analyzing, by the processing circuitry, the first image and the obtained vehicle information to determine current dimensions of at least part of the vehicle;
- comparing, by the processing circuitry, the current dimensions with allowed dimensions for at least a part of a current or upcoming route to be travelled by the vehicle;
- when a result of the comparison indicates that the current dimensions are out of bounds of the allowed dimensions, checking, by the processing circuitry, the first image to determine if the vehicle comprises an exceptional convoy sign;
- when the current dimensions are out of bounds and the vehicle does not comprise the exceptional convoy sign, providing, by the processing circuitry, information indicating that the current dimensions are out of bounds; and
- initiating, by the processing circuitry, a protection strategy in the vehicle when the current dimensions are out of bounds and the vehicle does not comprise the exceptional convoy sign.

The third aspect of the disclosure may seek to improve enabling the vehicle to become ready to drive. A technical benefit may include that the enabling of the vehicle to become ready to drive is improved.

Technical benefits of the third aspect of the disclosure may correspond to the technical benefits of the first and second aspects of the disclosure. Further, all examples of the first and second aspects are applicable to and combinable with all examples of the third aspect, and vice versa.

Optionally in some examples, including in at least one preferred example, the method may further comprise:
- determining, by the processing circuitry, that the vehicle is ready to drive when the result of the comparison indicates that the current dimensions are within bounds of the allowed dimensions and/or when the vehicle comprises the exceptional convoy sign.

Optionally in some examples, including in at least one preferred example, the method may further comprise:
- when the vehicle is determined to be ready to drive, storing, by the processing circuitry, information indicating at least one of: current dimensions, checked vehicle features and the exceptional convoy sign.

Optionally in some examples, including in at least one preferred example, the method may further comprise:
- triggering, by the processing circuitry, activation of at least one vehicle feature comprised in the vehicle;
- obtaining, by the processing circuitry, a second image of the vehicle after the at least one vehicle feature has been activated, wherein a current function of the at least one vehicle feature is derivable from the second image;
- based on the second image, comparing, by the processing circuitry, a current function of the activated at least one vehicle feature with its intended function, wherein the at least one vehicle feature is working correctly when the current function and the intended function are the same, and wherein the at least one vehicle feature is working incorrectly when there is a difference between the current function and the intended function; and
- determining, by the processing circuitry, that the vehicle is ready to drive when the at least one vehicle feature is working correctly

Optionally in some examples, including in at least one preferred example, the method may further comprise:
- determining, by the processing circuitry, that the vehicle is not ready to drive when the at least one vehicle feature is working incorrectly

Optionally in some examples, including in at least one preferred example, the method may further comprise:
- providing, by the processing circuitry, information indicating an incorrect function of the at least one vehicle feature when the result of the comparison indicates that the current function is not the same as the intended function

Optionally in some examples, including in at least one preferred example, the method may further comprise:
- storing, by the processing circuitry, the second image as justification of the current function of the at least one vehicle feature when it was used as a basis for determining that the vehicle is ready to drive.

According to a fourth aspect of the disclosure, a computer program product is provided. The computer program product comprises program code for performing, when executed by the processing circuitry, the method of the third aspect.

The fourth aspect of the disclosure may seek to improve enabling the vehicle to become ready to drive. A technical benefit may include that the enabling of the vehicle to become ready to drive is improved.

Technical benefits of the fourth aspect of the disclosure may correspond to the technical benefits of the first, second and third aspects of the disclosure. Further, all examples of the first, second and third aspects are applicable to and combinable with all examples of the fourth aspect, and vice versa.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect.

The fifth aspect of the disclosure may seek to improve enabling the vehicle to become ready to drive. A technical benefit may include that the enabling of the vehicle to become ready to drive is improved.

Technical benefits of the fifth aspect of the disclosure may correspond to the technical benefits of the first, second, third and fourth aspects of the disclosure. Further, all examples of the first, second, third and fourth aspects are applicable to and combinable with all examples of the fifth aspect, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary drawing illustrating a vehicle, according to an example.
**FIG. 2** is an exemplary flow chart illustrating a method, according to an example.
**FIG. 3** is an exemplary drawing illustrating a vehicle, according to an example.
**FIG. 4** is another view of **FIG. 1****,** according to an example.
**FIG. 5** is an exemplary flow chart illustrating a method, according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Vehicle height and particularly special loads are an issue for a user of the vehicle and also for road infrastructures. This is a safety issue for both the user of the vehicle and bystanders if the vehicle is deemed ready to drive, even though a dimension check has not been done to verify that the current dimensions of at least part of the vehicle are within the allowed dimensions. There is a strive to improve enabling the vehicle to become ready to drive and to reduce the risk of accidents and dangerous situations.

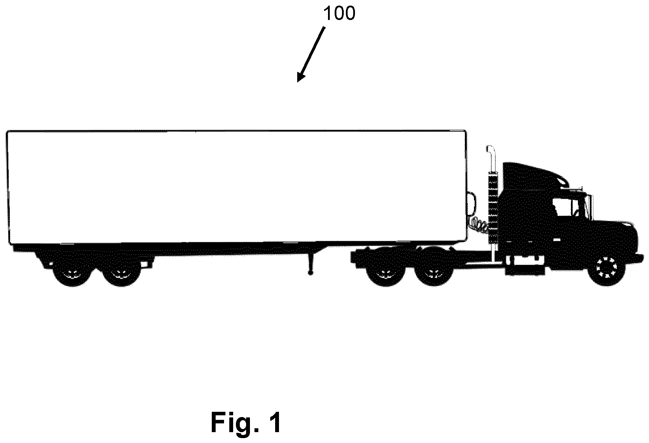

**FIG. 1** is an exemplary drawing illustrating a vehicle **100,** according to an example. The vehicle **100** is a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle **100** comprises a cab in which the user of the vehicle **100** may sit and operate the vehicle **100.** The cab comprises for example a steering wheel, a dashboard, seats, control devices etc.

The vehicle **100** may be a truck for towing one or more trailers. One or more loads may be located on the one or more trailers, or the trailer may be the load. The load may be any load arranged to be transported by the vehicle **100.** The load may be referred to as cargo, goods etc.

The vehicle **100** may be operated by a user (not shown) and/or be at least partly automatically driven, i.e., it may be a vehicle comprising autonomous driving capabilities.

The vehicle **100** may be a fully electric vehicle or a hybrid vehicle. Using other words, the vehicle **100** may be an at least partly electrically driven vehicle. As such, the vehicle **100** may comprise one or more electric motors/generators and/or an internal combustion engine (not shown) for driving the vehicle **100.**

The term vehicle will be used herein when referring to any of the above types of vehicles.

The vehicle **100** may comprise one, two or all of the following three functions:
- Road speed limiter (RSL): A function for limiting the vehicle speed.
- Access to lights: A function for activating lights comprised in the vehicle 100, for example brake lights, warnings, blinker etc.
- Road signs recognition: A function for detecting and recognizing information from road signs, speed, height limits etc.

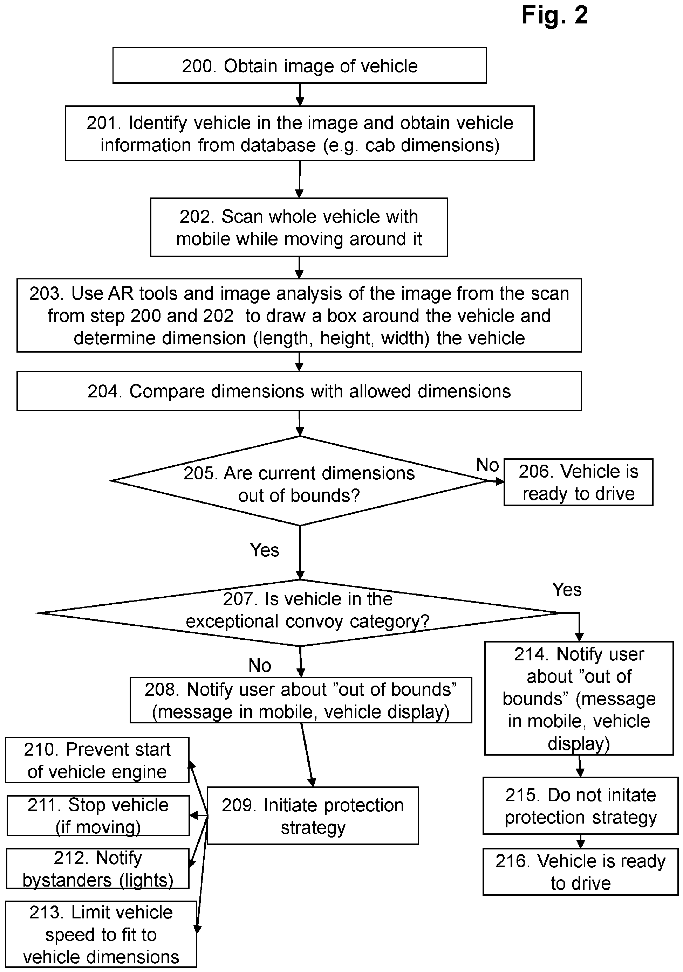

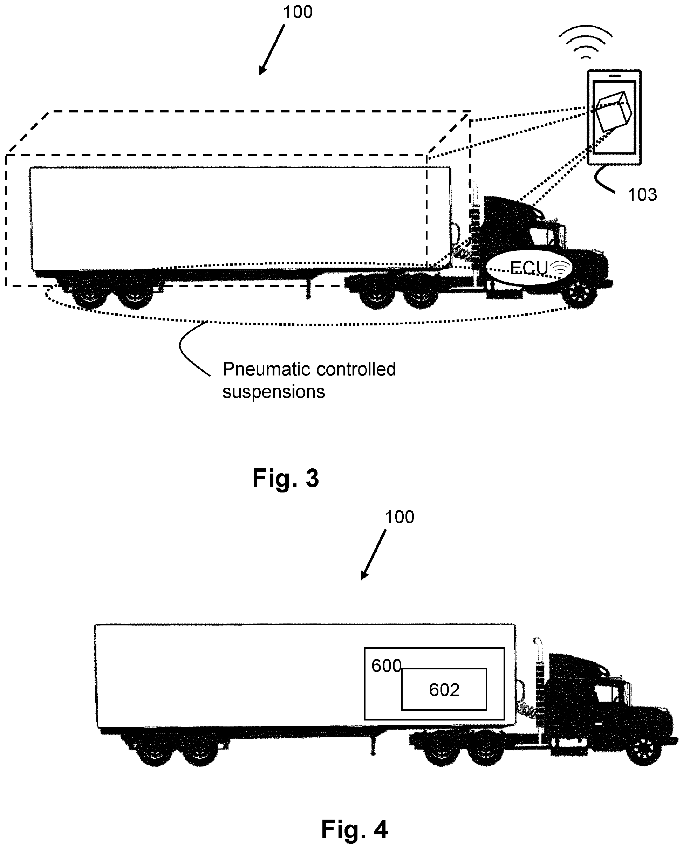

A method for enabling a vehicle **100** to become ready to drive will now be described with reference to **FIG. 2** which is an exemplary flow chart illustrating a method, according to an example, and **FIG. 3** which is an exemplary drawing illustrating a vehicle, according to an example. The method may be implemented as a computer application that will be used to ease the vehicle users' activities. The present disclosure will help the user with every legal aspect of the transport, creating a state of play of the vehicle 100. The method in FIG. 2 comprises at least one of the following steps, which steps may be performed in any suitable order than described below.

Step **200:** An image of the vehicle **100** is obtained. The image may be obtained using any suitable image capturing device **103,** as illustrated in **FIG. 3****.** The image capturing device **103** may be comprised in a mobile phone, a tablet computer, a smart watch, Personal Computer (PC), Internet of Things (IoT) device, a camera, just to mention some examples. The image capturing device **103** may be mounted on an infrastructure, or any other fixed base. The image capturing device **103** may be comprised in another vehicle, it may be comprised in an airborne device, e.g. a drone. Regardless of where the image capturing device **103** is located, it is arranged to obtain an image of the vehicle **100.**

The image may be obtained of any suitable part of the vehicle **100** from which the vehicle **100** may be identified. For example, the image may be obtained of the front of the vehicle **100** showing the license plate of the vehicle **100,** it may be obtained of the whole vehicle **100,** or it may be obtained of any other part of the vehicle **100** where an ID of the vehicle **100** is visible, just to mention some examples. Thus, the obtained image comprises information identifying the vehicle **100.** The information identifying vehicle may be any suitable information, for example a Vehicle Identification Number (VIN), a license plate, vehicle type information, vehicle brand information, a bar code, QR code or other type of code from which a vehicle identity may be obtained, just to mention some examples.

The obtained image may illustrate the outside of the vehicle **100.**

In an example where the image capturing device **103** is comprised in a mobile phone, a user holding the mobile phone may stand in front of the vehicle **100,** activate the camera application in the mobile phone to turn on the camera and use the camera to scan the vehicle **100,** i.e. to obtain an image of the vehicle **100.**

The vehicle **100** and the image capturing device **103** are arranged to communicate with each other, either directly via a direct communication link between the image capturing device **103** and the vehicle **100** or indirectly via another device (not shown). In the case of the indirect communication, the other device may be any suitable device, e.g. a storage memory offboard the vehicle **100.** The communication may use any suitable wireless communication standard, such as Bluetooth, Wifi, Near Field Communication (NFC) etc.

The obtained image may be provided from the image capturing device **103** to the processing circuitry arranged to further process the image.

Step **201:** Using information from the image capturing device **103** and image analysis tools, the vehicle **100** in the image is identified. The identification may comprise the type of vehicle, the vehicle brand, the vehicle identity etc. Using a Three Dimension (3D) vehicle database, it may be possible to identify which vehicle **100** that is in the image. From the identification, information about the vehicle **100** is obtained from a database. The vehicle information of the identified vehicle may be obtained by for example using the identification of the vehicle to find the corresponding or matching vehicle information in a memory storage, a database etc., i.e. the identification of the vehicle may be used as an index in order to find the corresponding or matching vehicle information.

Information in the database may provide dimensions of the vehicle **100** to be used as scale for the rest of the vehicle **100.** The dimensions may comprise, for example cab dimensions such as at least one of: height, width and length. Obtaining the dimensions of the vehicle **100** may be described as scaling the vehicle **100.** In other words, dimensions comprised in the vehicle information such as length, width or height of the vehicle **100** or parts of the vehicle **100** may be used to determine how to scale the image of the vehicle **100** correctly in order to determine dimensions of parts of the vehicle **100** or outside the vehicle **100** in the image that are not know and/or is not provided by the vehicle information.

From the image, it may also be able to recognize the presence of specific panels on the vehicle **100,** e.g. an exceptional convoy sign. An exceptional convoy sign is an indication of that the vehicle **100** transports oversized, overweight or exceptional load that exceeds the allowed dimensions.

Step **202:** Once the vehicle **100** has been identified and scaled, the image obtaining of the vehicle **100** may continue. If the image obtained in step **200** was of the front of the vehicle **100,** the image obtaining performed in step **202** may be of the whole vehicle **100.** If the image obtained in step **200** was of the whole vehicle **100,** then it may not be necessary to perform step **202.** Steps **200** and **202** may be combined into one step where an image of the whole vehicle **100** is obtained.

In an example where the image capturing device **103** is comprised in a mobile phone, a user may obtain the image of the vehicle **100** while holding the mobile phone and moving around the vehicle **100.** The user may scan the vehicle 100 upon request, or it may be done as part of the image obtaining described above in step **200.**

Step **203:** Augmented Reality (AR) tools may be used to perform image analysis of the image of the vehicle **100** and to draw a virtual box around at least part of the vehicle **100,** for example the load of the vehicle **100.** The virtual box may be drawn around the load of the vehicle **100** from the ground. The virtual box is illustrated as a dashed lines in **FIG. 2****.** From the virtual box, the current dimensions of at least part of the vehicle **100** may be determined, for example the current dimensions of the load. The current dimensions may comprise at least one of length, height and width of at least part of the vehicle **100.** The vehicle dimensions obtained in step **201,** e.g. the cab dimensions, may be used as a scale for determining the current dimensions in step **203.**

Information indicating the current dimensions, i.e. height, width and length of the box, may then be sent to the vehicle **100** and/or provided to the user. The information indicating the current dimension may be stored within vehicle Electric Control Unit (ECU), or in any other memory unit onboard or offboard the vehicle **100.**

Step **204:** The current dimensions of the load are compared to allowed dimensions. The allowed dimensions may be referred to as legal dimensions. The allowed dimensions may be allowed for example according to the jurisdiction of the geographical area, e.g. country, the vehicle **100** is operating in. The allowed dimension may be obtained from a database, from data available on the internet and the geographical area may be extracted from a navigation position of the vehicle **100.** If at least one of the current dimensions of at least part of the vehicle **100,** e.g. height, width or length, are out of bounds of the allowed dimensions, a message may be sent to the user, for example both on the mobile phone and in the vehicle display.

Step **205:** In this step, it is checked if the current dimensions of at least part of the vehicle **100** are out of bounds of the allowed dimensions. It may be the current dimensions of the whole vehicle or only part of the vehicle **100,** e.g. the load, that is checked. If the current dimensions are out of bounds, as indicated with "yes" in **FIG. 2****,** then the method proceeds to step **207.** If the current dimensions are not out of bounds, i.e. they are within bounds, as indicated with "no" in **FIG. 2****,** then the method proceeds to step **206.**

Step **206:** This step is performed when the current dimensions of at least part of the vehicle **100** are within bounds of the allowed dimensions. When the current dimensions are within bounds, the vehicle **100** is determined to be ready to drive.

Step **207:** This step is performed when the current dimensions of at least part of the vehicle **100** are out of bounds of the allowed dimensions. When the current dimensions are out of bounds, it is checked if the vehicle **100** is in the exceptional convoy category. This may be checked by analyzing the obtained image from step **200** and/or step **202** to see if the vehicle **100** comprises an exceptional convoy sign. Another way of checking this may be by obtaining information from a database comprising information about exceptional convoy vehicles. If the vehicle **100** is in the exceptional convoy category, as indicated with "yes" in **FIG. 2****,** the method proceeds to step **214.** If the vehicle **100** is not in the exceptional convoy category, as indicated with "no" in **FIG. 2****,** the method proceeds to step **208.**

Step **208:** This step may be performed if the vehicle **100** is not in the exceptional convoy category. The user of the vehicle **100** may be informed about the vehicle **100** being out of bounds. The information may be provided as a message in a mobile phone, in a vehicle display, an audio message etc. Using the panels recognition, it may be possible to compare load height to a height limitation. If the road information indicates that the height limitation of the road is lower than the load of the vehicle **100,** the user may be informed about the risk. Information may be provided to the user in any suitable form, for example pop up on an onboard display, sound alert, etc.

Step **209:** A protection strategy may be initiated when the vehicle **100** is out of bounds and is not in the exceptional convoy category. The protection strategy may comprise at least one of the steps **210, 211, 212** and **213.** The protection strategy may be initiated by sending instructions to the vehicle **100** to execute the protection strategy or to send information to a user interface accessible by the user of the vehicle **100** which manually may execute the protection strategy.

Step **210:** This step may be comprised in the protection strategy. If the current dimensions are out of bounds of the allowed dimension, the start of the engine may be inhibited, as long as the current dimensions are not compliant with the allowed dimensions. It may be impossible for the engine to start. However, a switch may lift the inhibition. Step **210** may comprise initiating the protection strategy by sending instructions to the engine control comprised in the vehicle **100** to inhibit start of the engine or to send information to a user interface accessible by the user of the vehicle **100** which manually inhibits start of the engine.

Step **211:** This step may be comprised in the protection strategy. If the vehicle **100** is moving, it may be stopped. If the current dimensions are out of bounds of the allowed dimension, the vehicle **100** may be stopped using RLS or a brake function, or the speed may be limited, or vehicle **100** might be stopped to avoid accident, when possible. Step **211** may comprise initiating the protection strategy by sending instructions to the brake control or speed control comprised in the vehicle **100** to stop the vehicle **100** or to send information to a user interface accessible by the user of the vehicle **100** which manually stops the vehicle **100.**

Step **212:** This step may be comprised in the protection strategy. Bystanders may be notified about the vehicle **100** being out of bounds, for example by means of activated or blinking lights, a sound alarm etc. Access to lights may be a vehicle feature comprised in the vehicle **100** that is used to alert bystanders of the vehicle upcoming danger. Step **212** may comprise initiating the protection strategy by sending instructions to the light control or alarm control comprised in the vehicle **100** to activate the lights or alarm, or to send information to a user interface accessible by the user of the vehicle **100** which manually activates the lights or alarm.

Step **213:** This step may be comprised in the protection strategy. The vehicle speed may be limited to fit to the current dimensions. This may be done using the RSL feature comprised in the vehicle **100.** If the current dimensions are out of bounds of the allowed dimension, the vehicle speed may be limited to a certain value according to the current dimension of the vehicle **100.** The dimension of the vehicle **100** may be associated with a speed limit which the vehicle **100** cannot exceed. If the speed limit is exceeded it may increase the risk of the vehicle **100** tipping over, the load falling off the vehicle **100** etc. Step **213** may comprise initiating the protection strategy by sending instructions to the speed control comprised in the vehicle **100** to limit the speed of the vehicle **100** or to send information to a user interface accessible by the user of the vehicle **100** which manually limits the speed.

Another protection strategy may be to correct the height of the vehicle **100** using for example suspension control of the vehicle **100** done manually by the user or automatically by the vehicle **100** itself, and this may be done by sending instructions to the suspension control comprised in the vehicle **100** to adjust the height of the vehicle **100** or to send information to a user interface accessible by the user of the vehicle **100** which manually adjusts the height.

Step **214:** This step may be performed when the current dimensions of at least part of the vehicle **100** are out of bounds and the vehicle **100** is comprised in the exceptional convoy category. The user may be notified about the out of bounds, for example by means of a message in a mobile phone, in a vehicle display, an audio message etc. If, from analysis of the image, an exceptional convoy sign is detected on the vehicle **100,** the user may be informed of the vehicle dimensions, but no protection strategy will be used.

Step **215:** The protection strategy may not be initiated when the vehicle **100** is in the exceptional convoy category, even though the current dimensions of at least part of the vehicle **100** are out of bounds.

Step **216:** The vehicle **100** may be determined to be ready to drive.

The present disclosure may involve using a smartphone app. This app may be arranged to measure the vehicle, e.g. the truck and the load. This information may be sent to the vehicle **100.** From the information, the vehicle **100** may be able to correct the vehicle height using suspensions control, e.g. the load height.

**FIG. 4** is another view of **FIG. 1****,** according to an example. The vehicle **100** comprises a computer system **600** for enabling a vehicle **100** to become ready to drive. The computer system **600** comprises processing circuitry **602** configured to obtain a first image of an outside of the vehicle **100.** The processing circuitry **602** is configured to identify the vehicle **100** in the first image. The first image comprises vehicle identification information, and the vehicle **100** may be identified from this vehicle identification. As mentioned previously, the vehicle identification information may be any suitable information, for example a VIN, a license plate, vehicle type information, vehicle brand information, a bar code, QR code or other type of code from which a vehicle identity may be obtained, just to mention some examples. The vehicle identity information in the first image may be matched with information in a database of known vehicle identify information. The identification of the vehicle in the image is not further explained since how to identify a vehicle in the image is readily understood by a person skilled in the art.

The processing circuitry **602** is configured to obtain vehicle information of the identified vehicle. The vehicle information may comprise, for example cab dimensions. The vehicle information of the identified vehicle may be obtained by for example using the identification of the vehicle to find the corresponding or matching vehicle information in a memory storage, a database etc., i.e. the identification of the vehicle may be used as an index in order to find the corresponding or matching vehicle information.

The processing circuitry **602** is configured to analyze the first image and the vehicle information to determine current dimensions of at least part of the vehicle 100. The vehicle information is used as a scale when determining the current dimensions. In other words, dimensions comprised in the vehicle information such as length, width or height of the vehicle **100** or parts of the vehicle **100** may be used to determine how to scale the image of the vehicle **100** correctly in order to determine dimensions of parts of the vehicle **100** or outside the vehicle **100** in the image that are not know and/or is not provided by the vehicle information.

The processing circuitry **602** is configured to compare the current dimensions with allowed dimensions for at least a part of a current or upcoming route to be travelled by the vehicle **100.** The allowed dimensions may be obtained from a navigation system, a database etc. The processing circuitry **602** is configured to, when a result of the comparison indicates that the current dimensions are out of bounds of the allowed dimensions, check the first image to determine if the vehicle **100** comprises an exceptional convoy sign. The processing circuitry **602** is configured to, when the current dimensions are out of bounds and the vehicle 100 does not comprise the exceptional convoy sign, provide, e.g. to a user of the vehicle **100,** information indicating that the current dimensions are out of bounds.

The processing circuitry **602** is configured to initiate a protection strategy in the vehicle **100** when the current dimensions are out of bounds and the vehicle **100** does not comprise the exceptional convoy sign. The protection strategy may comprise e.g. prevent the start of vehicle engine, alert bystanders with lights, limit vehicle speed, determine load reduction to fit within bounds etc. The protection strategy may be initiated by sending instructions to the vehicle **100** to execute the protection strategy or to send information to a user interface accessible by the user of the vehicle **100** which manually may execute the protection strategy.

The processing circuitry **602** may be further configured to determine that the vehicle 100 is ready to drive when the result of the comparison indicates that the current dimensions are within bounds of the allowed dimensions and/or when the vehicle **100** comprises the exceptional convoy sign.

The processing circuitry **602** may be further configured to, when the vehicle **100** is determined to be ready to drive, store information indicating at least one of:
- current dimensions
- checked vehicle features, and
- the exceptional convoy sign.

The processing circuitry **602** may be further configured to trigger activation of at least one vehicle feature comprised in the vehicle **100.** The at least one vehicle feature may comprise e.g. brake lights, speed information presence, etc. The at least one vehicle feature may be located on the outside of the vehicle **100.** The processing circuitry **602** may be further configured to obtain a second image of the vehicle **100** after the at least one vehicle feature has been activated. A current function of the at least one vehicle feature may be derivable from the second image. The processing circuitry **602** may be further configured to, based on the second image, compare a current function of the activated at least one vehicle feature with its intended function. The intended function may be known from a database. The at least one vehicle feature works correctly when the current function and the intended function are the same. The at least one vehicle feature is working incorrectly when there is a difference between the current function and the intended function. The processing circuitry **602** may be further configured to determine that the vehicle **100** is ready to drive when the at least one vehicle feature is working correctly.

The processing circuitry **602** may be further configured to determine that the vehicle **100** is not ready to drive when the at least one vehicle feature is working incorrectly.

The processing circuitry **602** may be further configured to provide, e.g. to the user of the vehicle **100,** information indicating an incorrect function of the at least one vehicle feature when the result of the comparison indicates that the current function is not the same as the intended function.

The processing circuitry **602** may be further configured to store the second image as justification of the current function of the at least one vehicle feature when it was used as a basis for determining that the vehicle **100** is ready to drive.

The processing circuitry **602** may be further configured to determine that the current or upcoming route cannot be travelled by the vehicle 100 because the current dimensions are out of bounds of the allowed dimensions. The processing circuitry **602** may be further configured to determine an alternative route to be taken by the vehicle **100** to reach its destination. The current dimensions are within the bounds of the alternative route.

The processing circuitry **602** may be further configured to provide, e.g. to the user of the vehicle **100,** information indicating that the current or upcoming route cannot be travelled by the vehicle **100.**

The processing circuitry **602** may be further configured to provide, e.g. to the user of the vehicle **100,** information indicating the current dimensions being out of bounds of the allowed dimensions and when the vehicle **100** comprises the exceptional convoy sign.

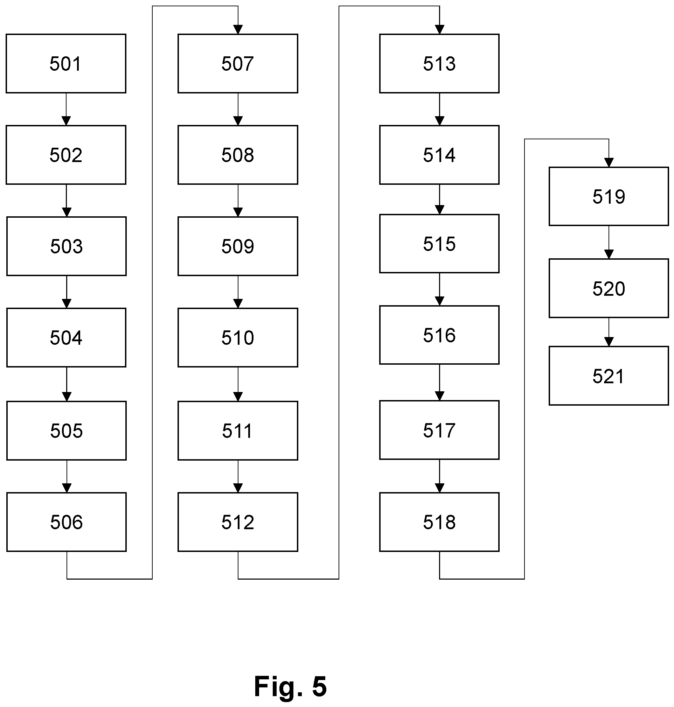

**FIG. 5** is a flow chart of a method for enabling a vehicle **100** to become ready to drive, according to an example. The method comprises at least one of the following steps, which steps may be performed in any suitable order than described below:

Step **501:** This step corresponds to steps **200** and **202** in **FIG. 2****.** Obtaining, by processing circuitry **602** of a computer system **600,** a first image of an outside of the vehicle 100.

Step **502:** This step corresponds to step **201** in **FIG. 2****.** Identifying, by the processing circuitry **602,** the vehicle **100** in the first image. The first image comprises vehicle identification information, and the vehicle **100** may be identified from this vehicle identification. As mentioned previously, the vehicle identification information may be any suitable information, for example a VIN, a license plate, vehicle type information, vehicle brand information, a bar code, QR code or other type of code from which the vehicle may be identified, just to mention some examples. The vehicle identity information in the first image may be matched with information in a database of known vehicle identify information. The identification of the vehicle in the image is not further explained since how to identify a vehicle in the image is readily understood by a person skilled in the art.

Step **503:** This step corresponds to step **201** in **FIG. 2****.** Obtaining, by the processing circuitry **602,** vehicle information of the identified vehicle. The vehicle information may comprise, for example cab dimensions. The vehicle information of the identified vehicle may be obtained by for example using the identification of the vehicle to find the corresponding or matching vehicle information in a memory storage, a database etc., i.e. the identification of the vehicle may be used as an index in order to find the corresponding or matching vehicle information.

Step **504:** This step corresponds to step **203** in **FIG. 2****.** Analyzing, by the processing circuitry **602,** the first image and the obtained vehicle information to determine current dimensions of at least part of the vehicle **100.** The vehicle information is used as a scale when determining the current dimensions. In other words, dimensions comprised in the vehicle information such as length, width or height of the vehicle **100** or parts of the vehicle **100** may be used to determine how to scale the image of the vehicle **100** correctly in order to determine dimensions of parts of the vehicle **100** or outside the vehicle **100** in the image that are not know and/or is not provided by the vehicle information.

Step **505:** This step corresponds to steps **205** and **207** in **FIG. 2****.** Comparing, by the processing circuitry **602,** the current dimensions with allowed dimensions for at least a part of a current or upcoming route to be travelled by the vehicle **100.**

Step **506:** This step corresponds to step **207** in **FIG. 2****.** When a result of the comparison indicates that the current dimensions are out of bounds of the allowed dimensions, checking, by the processing circuitry **602,** the first image to determine if the vehicle **100** comprises an exceptional convoy sign.

Step **507:** This step corresponds to step **208** in **FIG. 2****.** When the current dimensions are out of bounds and the vehicle **100** does not comprise the exceptional convoy sign, providing, by the processing circuitry **602,** e.g. to a user of the vehicle 100, information indicating that the current dimensions are out of bounds.

Step **508:** This step corresponds to steps **209, 210, 211, 212** and **213** in **FIG. 2****.** Initiating, by the processing circuitry **602,** a protection strategy in the vehicle **100** when the current dimensions are out of bounds and the vehicle **100** does not comprise the exceptional convoy sign. The protection strategy may be initiated by sending instructions to the vehicle 100 to execute the protection strategy or to send information to a user interface accessible by the user of the vehicle **100** which manually may execute the protection strategy.

Step **509:** This step corresponds to steps **206** and **216** in **FIG. 2****.** This may be an optional step. Determining, by the processing circuitry **602,** that the vehicle **100** is ready to drive when the result of the comparison indicates that the current dimensions are within bounds of the allowed dimensions and/or when the vehicle **100** comprises the exceptional convoy sign.

Step **510:** This step corresponds to steps **206** and **216** in **FIG.** 2. This may be an optional step. When the vehicle **100** is determined to be ready to drive, storing, by the processing circuitry **602,** information indicating at least one of: current dimensions, checked vehicle features and the exceptional convoy sign.

Step **511:** This may be an optional step. Triggering, by the processing circuitry **602,** activation of at least one vehicle feature located on the outside of the vehicle **100.** The at least one vehicle feature may be located on the outside of the vehicle **100.**

Step **512:** This may be an optional step. Obtaining, by the processing circuitry **602,** a second image of the outside of the vehicle **100** after the at least one vehicle feature has been activated. A current function of the at least one vehicle feature may be derivable from the second image.

Step **513:** This may be an optional step. Based on the second image, comparing, by the processing circuitry **602,** a current function of the activated at least one vehicle feature with its intended function. The intended function may be known from a database. The at least one vehicle feature works correctly when the current function and the intended function are the same. The at least one vehicle feature is working incorrectly when there is a difference between the current function and the intended function.

Step **514:** This may be an optional step. Determining, by the processing circuitry **602,** that the vehicle **100** is ready to drive when the at least one vehicle feature is working correctly.

Step **515:** This may be an optional step. Determining, by the processing circuitry **602,** that the vehicle **100** is not ready to drive when the at least one vehicle feature is working incorrectly. An alert may be triggered when the vehicle **100** is not ready to drive, and driving the vehicle may be prevented.

Step **516:** This may be an optional step. Providing, by the processing circuitry **602,** e.g. to the user of the vehicle **100,** information indicating an incorrect function of the at least one vehicle feature when the result of the comparison indicates that the current function is not the same as the intended function.

Step **517:** This may be an optional step. Storing, by the processing circuitry **602,** the second image as justification of the current function of the at least one vehicle feature when it was used as a basis for determining that the vehicle **100** is ready to drive.

Step **518:** This may be an optional step. Determining, by the processing circuitry **602,** that the current or upcoming route cannot be travelled by the vehicle **100** because the current dimensions are out of bounds of the allowed dimensions.

Step **519:** This may be an optional step. Determining an alternative route to be taken by the vehicle **100** to reach its destination. The current dimensions are within the bounds of the alternative route.

Step **520:** This may be an optional step. Providing, e.g. to the user of the vehicle 100, information indicating that the current or upcoming route cannot be travelled by the vehicle **100.**

Step **521:** This may be an optional step. Providing, e.g. to the user of the vehicle **100,** information indicating the current dimensions being out of bounds of the allowed dimensions and when the vehicle **100** comprises the exceptional convoy sign.

A computer program product comprising program code for performing, when executed by the processing circuitry **602,** the method described herein.

A non-transitory computer-readable storage medium comprising instructions, which when executed by the processing circuitry **602,** cause the processing circuitry **602** to perform the method described herein.

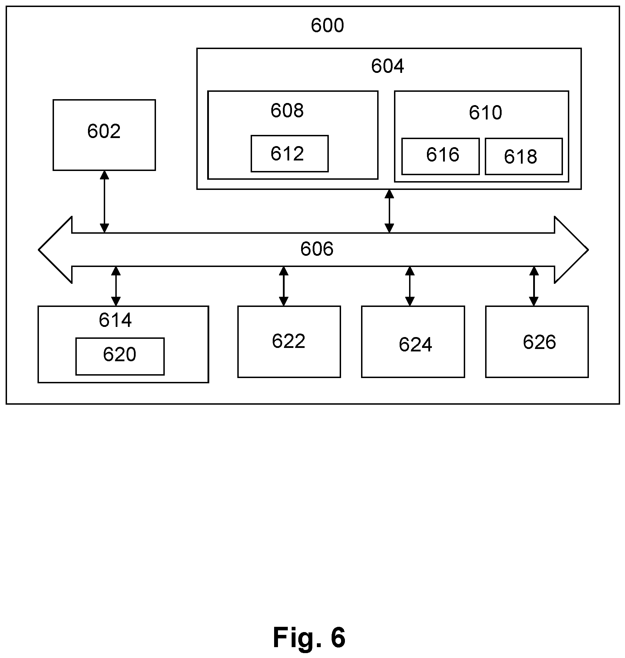

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The following examples may exemplify further aspects of the disclosure and may be combined with the above examples in any suitable manner.

**Example 1:** A computer system **600** for enabling a vehicle **100** to become ready to drive, the computer system **600** comprising processing circuitry **602** configured to:
- obtain a first image of an outside of the vehicle **100;**
- identify the vehicle **100** in the first image;
- obtain vehicle information of the identified vehicle;
- analyze the first image to determine current dimensions of at least part of the vehicle **100,** wherein the vehicle information is used as a scale when determining the current dimensions;
- compare the current dimensions with allowed dimensions for at least a part of a current or upcoming route to be travelled by the vehicle **100;**
- when a result of the comparison indicates that the current dimensions are out of bounds of the allowed dimensions, check the first image to determine if the vehicle **100** comprises an exceptional convoy sign;
- when the current dimensions are out of bounds and the vehicle **100** does not comprise the exceptional convoy sign, provide information indicating that the current dimensions are out of bounds; and to
- initiate a protection strategy in the vehicle **100** when the current dimensions are out of bounds and the vehicle **100** does not comprise the exceptional convoy sign.

**Example 2:** The computer system **600** of example 1, wherein the processing circuitry **602** is further configured to:
- determine that the vehicle **100** is ready to drive when the result of the comparison indicates that the current dimensions are within bounds of the allowed dimensions and/or when the vehicle **100** comprises the exceptional convoy sign.

**Example 3:** The computer system **600** of example 2, wherein the processing circuitry **602** is further configured to:
- when the vehicle **100** is determined to be ready to drive, store information indicating at least one of: current dimensions, checked vehicle features and the exceptional convoy sign.

**Example 4:** The computer system **600** of any of examples 1-3 wherein the processing circuitry **602** is further configured to:
- trigger activation of at least one vehicle feature comprised in the vehicle **100;**
- obtain a second image of the vehicle **100** after the at least one vehicle feature has been activated, wherein a current function of the at least one vehicle feature is derivable from the second image;
- based on the second image, compare a current function of the activated at least one vehicle feature with its intended function, wherein the at least one vehicle feature is working correctly when the current function and the intended function are the same, and wherein the at least one vehicle feature is working incorrectly when there is a difference between the current function and the intended function; and
- determine that the vehicle **100** is ready to drive when the at least one vehicle feature is working correctly.

**Example 5:** The computer system **600** of example 4, wherein the processing circuitry **602** is further configured to:
- determine that the vehicle **100** is not ready to drive when the at least one vehicle feature is working incorrectly.

**Example 6:** The computer system **600** of example 5, wherein the processing circuitry **602** is further configured to:
- provide information indicating an incorrect function of the at least one vehicle feature when the result of the comparison indicates that the current function is not the same as the intended function.

**Example 7:** The computer system **600** of example 4, wherein the processing circuitry **602** is further configured to:
- store the second image as justification of the current function of the at least one vehicle feature when it was used as a basis for determining that the vehicle **100** is ready to drive.

**Example 8:** The computer system **600** of any of examples 1-7, wherein the processing circuitry **602** is further configured to:
- determine that the current or upcoming route cannot be travelled by the vehicle **100** because the current dimensions are out of bounds of the allowed dimensions; and to
- determine an alternative route to be taken by the vehicle **100** to reach its destination, wherein the current dimensions are within bounds of the alternative route.

**Example 9:** The computer system **600** of example 8, wherein the processing circuitry **602** is further configured to:
- provide information indicating that the current or upcoming route cannot be travelled by the vehicle **100.**

**Example 10:** The computer system **600** of any of examples 1-9, wherein the processing circuitry **602** is further configured to:
- provide information indicating that the current dimensions being out of bounds of the allowed dimensions and when the vehicle **100** comprises the exceptional convoy sign.

**Example 11:** A vehicle **100** comprising the computer system **600** of any of examples 1-10.

**Example 12:** A computer-implemented method for enabling a vehicle **100** to become ready to drive, the method comprising:
- obtaining **200, 202, 501,** by processing circuitry **602** of a computer system **600,** a first image of an outside of the vehicle **100;**
- identifying **201, 502,** by the processing circuitry **602,** the vehicle **100** in the first image;
- obtaining **201, 503,** by the processing circuitry **602,** vehicle information of the identified vehicle;
- analyzing **203, 504,** by the processing circuitry **602,** the first image to determine current dimensions of at least part of the vehicle **100,** wherein the vehicle information is used as a scale when determining the current dimensions;
- comparing **205, 207, 505,** by the processing circuitry **602,** the current dimensions with allowed dimensions for at least a part of a current or upcoming route to be travelled by the vehicle **100;**
- when a result of the comparison indicates that the current dimensions are out of bounds of the allowed dimensions, checking **207, 506,** by the processing circuitry **602,** the first image to determine if the vehicle **100** comprises an exceptional convoy sign;
- when the current dimensions are out of bounds and the vehicle **100** does not comprise the exceptional convoy sign, providing **208, 507,** by the processing circuitry **602,** information indicating that the current dimensions are out of bounds; and
- initiating **209, 210, 211, 212, 213, 508,** by the processing circuitry **602,** a protection strategy in the vehicle **100** when the current dimensions are out of bounds and the vehicle **100** does not comprise the exceptional convoy sign.

**Example 13:** The method of example 12, further comprising:
- determining **206, 216, 509,** by the processing circuitry **602,** that the vehicle **100** is ready to drive when the result of the comparison indicates that the current dimensions are within bounds of the allowed dimensions and/or when the vehicle 100 comprises the exceptional convoy sign.

**Example 14:** The method of any of examples 12-13, further comprising:
- when the vehicle **100** is determined to be ready to drive, storing **206, 216, 510,** by the processing circuitry **602,** information indicating at least one of: current dimensions, checked vehicle features and the exceptional convoy sign.

**Example 15:** The method of any of examples 12-14, further comprising:
- triggering **511,** by the processing circuitry **602,** activation of at least one vehicle feature located on the outside of the vehicle **100;**
- obtaining **512,** by the processing circuitry **602,** a second image of the outside of the vehicle **100** after the at least one vehicle feature has been activated, wherein a current function of the at least one vehicle feature is derivable from the second image;
- based on the second image, comparing **513,** by the processing circuitry **602,** a current function of the activated at least one vehicle feature with its intended function, wherein the at least one vehicle feature is working correctly when the current function and the intended function are the same, and wherein the at least one vehicle feature is working incorrectly when there is a difference between the current function and the intended function; and
- determining **514,** by the processing circuitry **602,** that the vehicle **100** is ready to drive when the at least one vehicle feature is working correctly.

**Example 16:** The method of any of examples 12-15, further comprising:
- determining **515,** by the processing circuitry **602,** that the vehicle **100** is not ready to drive when the at least one vehicle feature is working incorrectly.

**Example 17:** The method of any of examples 12-16, further comprising:
- providing **516,** by the processing circuitry **602,** information indicating an incorrect function of the at least one vehicle feature when the result.

**Example 18:** The method of any of examples 12-17, further comprising:
- storing **517,** by the processing circuitry **602,** the second image as justification of the current function of the at least one vehicle feature when it was used as a basis for determining that the vehicle **100** is ready to drive.

**Example 19:** A computer program product comprising program code for performing, when executed by a processing circuitry **602,** the method of any of examples 12-18.

**Example 20:** A non-transitory computer-readable storage medium comprising instructions, which when executed by a processing circuitry **602,** cause the processing circuitry **602** to perform the method of any of examples 12-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) for enabling a vehicle (100) to become ready to drive, the computer system (600) comprising processing circuitry (602) configured to:
obtain a first image of an outside of the vehicle (100);
identify the vehicle (100) in the first image;
obtain vehicle information of the identified vehicle;
analyze the first image and the obtained vehicle information to determine current dimensions of at least part of the vehicle (100), wherein the vehicle information is used as a scale when determining the current dimensions;
compare the current dimensions with allowed dimensions for at least a part of a current or upcoming route to be travelled by the vehicle (100);
when a result of the comparison indicates that the current dimensions are out of bounds of the allowed dimensions, check the first image to determine if the vehicle (100) comprises an exceptional convoy sign;
when the current dimensions are out of bounds and the vehicle (100) does not comprise the exceptional convoy sign, provide information indicating that the current dimensions are out of bounds; and to
initiate a protection strategy in the vehicle (100) when the current dimensions are out of bounds and the vehicle (100) does not comprise the exceptional convoy sign.

2. The computer system (600) of claim 1, wherein the processing circuitry (602) is further configured to:
determine that the vehicle (100) is ready to drive when the result of the comparison indicates that the current dimensions are within bounds of the allowed dimensions and/or when the vehicle (100) comprises the exceptional convoy sign.

3. The computer system (600) of claim 2, wherein the processing circuitry (602) is further configured to:
when the vehicle (100) is determined to be ready to drive, store information indicating at least one of: current dimensions, checked vehicle features and the exceptional convoy sign.

4. The computer system (600) of any of claims 1-3 wherein the processing circuitry (602) is further configured to:
trigger activation of at least one vehicle feature comprised in the vehicle (100);
obtain a second image of the vehicle (100) after the at least one vehicle feature has been activated, wherein a current function of the at least one vehicle feature is derivable from the second image;
based on the second image, compare a current function of the activated at least one vehicle feature with its intended function, wherein the at least one vehicle feature is working correctly when the current function and the intended function are the same, and wherein the at least one vehicle feature is working incorrectly when there is a difference between the current function and the intended function; and
determine that the vehicle (100) is ready to drive when the at least one vehicle feature is working correctly.

5. The computer system (600) of claim 4, wherein the processing circuitry (602) is further configured to:
determine that the vehicle (100) is not ready to drive when the at least one vehicle feature is working incorrectly.

6. The computer system (600) of claim 5, wherein the processing circuitry (602) is further configured to:
provide information indicating an incorrect function of the at least one vehicle feature when the result of the comparison indicates that the current function is not the same as the intended function.

7. The computer system (600) of claim 4, wherein the processing circuitry (602) is further configured to:
store the second image as justification of the current function of the at least one vehicle feature when it was used as a basis for determining that the vehicle (100) is ready to drive.

8. The computer system (600) of any of claims 1-7, wherein the processing circuitry (602) is further configured to:
determine that the current or upcoming route cannot be travelled by the vehicle (100) because the current dimensions are out of bounds of the allowed dimensions; and to
determine an alternative route to be taken by the vehicle (100) to reach its destination, wherein the current dimensions are within bounds of the alternative route.

9. The computer system (600) of claim 8, wherein the processing circuitry (602) is further configured to:
provide information indicating that the current or upcoming route cannot be travelled by the vehicle (100).

10. The computer system (600) of any of claims 1-9, wherein the processing circuitry (602) is further configured to:
provide information indicating the current dimensions being out of bounds of the allowed dimensions and when the vehicle (100) comprises the exceptional convoy sign.

11. A vehicle (100) comprising the computer system (600) of any of claims 1-10.

12. A computer-implemented method for enabling a vehicle (100) to become ready to drive, the method comprising:
*obtaining* (200, 202, 501), by processing circuitry (602) of a computer system (600), a first image of an outside of the vehicle (100);
*identifying* (201, 502), by the processing circuitry (602), the vehicle (100) in the first image;
*obtaining* (201, 503), by the processing circuitry (602), vehicle information of the identified vehicle;
*analyzing* (203, 504), by the processing circuitry (602), the first image and the obtained vehicle information to determine current dimensions of at least part of the vehicle (100), wherein the vehicle information is used as a scale when determining the current dimensions;
*comparing* (205, 207, 505), by the processing circuitry (602), the current dimensions with allowed dimensions for at least a part of a current or upcoming route to be travelled by the vehicle (100);
when a result of the comparison indicates that the current dimensions are out of bounds of the allowed dimensions, *checking* (207, 506), by the processing circuitry (602), the first image to determine if the vehicle (100) comprises an exceptional convoy sign;
when the current dimensions are out of bounds and the vehicle (100) does not comprise the exceptional convoy sign, *providing* (208, 507), by the processing circuitry (602), information indicating that the current dimensions are out of bounds; and
*initiating* (209, 210, 211, 212, 213, 508), by the processing circuitry (602), a protection strategy in the vehicle (100) when the current dimensions are out of bounds and the vehicle (100) does not comprise the exceptional convoy sign.

13. The method of claim 12, further comprising:
*determining* (206, 216, 509), by the processing circuitry (602), that the vehicle (100) is ready to drive when the result of the comparison indicates that the current dimensions are within bounds of the allowed dimensions and/or when the vehicle (100) comprises the exceptional convoy sign.

14. A computer program product comprising program code for performing, when executed by a processing circuitry (602), the method of any of claims 12-13.

15. A non-transitory computer-readable storage medium comprising instructions, which when executed by a processing circuitry (602), cause the processing circuitry (602) to perform the method of any of claims 12-13.
